# EUROPÄISCHE PATENTSCHRIFT

(11) **EP 3 827 655 B1**
(45) Veröffentlichungstag und Bekanntmachung des Hinweises auf die Patenterteilung: **28.08.2024**
(21) Anmeldenummer: 20194761.1
(22) Anmeldetag: 07.09.2020
(51) Int. Cl.: A01B 71/02, F02D 41/02, B60G 17/0195, B60W 50/00, B60W 30/00

(54) **ZUGMASCHINE**
TOWING VEHICLE
TRACTEUR

(30) Priorität: 29.11.2019 DE 102019132547
(43) Veröffentlichungstag der Anmeldung: 02.06.2021
(73) Patentinhaber: CLAAS Tractor S.A.S., 78141 Vélizy-Villacoublay Cedex (FR)
(72) Erfinder: Ehlert, Christian, 33719 Bielefeld (DE); Wieckhorst, Jan Carsten, 33104 Paderborn (DE); Birkmann, Christian, 33775 Versmold (DE); Schütte, Robin, 33142 Büren (DE); Müller, Ralf, 39217 Schönbeck/OT Pretzien (DE); Neitemeier, Dennis, 59510 Lippetal (DE)
(74) Vertreter: CLAAS Gruppe

(56) Entgegenhaltungen:
- DE-A1- 102005 001 526
- DE-A1- 102016 118 203
- DE-A1- 102017 119 784
- US-A1- 2010 192 907

## Beschreibung

Die vorliegende Erfindung betrifft eine Zugmaschine, insbesondere Traktor, gemäß dem Oberbegriff von Anspruch 1. Weiterhin betrifft die Erfindung ein Verfahren zum Betreiben einer Zugmaschine gemäß dem Oberbegriff des Anspruches 17.

Eine Zugmaschine, insbesondere eine landwirtschaftliche Zugmaschine wie ein Traktor, weist einen Antriebsstrang sowie wenigstens ein an die Zugmaschine adaptiertes Anbaugerät auf. Der Antriebsstrang umfasst dabei zumindest einen Antriebsmotor, ein Getriebe, zumindest ein Nebenaggregat und zumindest einen Nebenabtrieb. Einem als Verbrennungsmotor ausgeführten Antriebsmotor ist für dessen Betrieb ein Motorsteuergerät zur Drehzahlsteuerung zugeordnet, welches sich bei der Ansteuerung an einem für den Verbrennungsmotor spezifischen Kraftstoffverbrauchskennfeld orientiert. Das Getriebe weist ein Getriebesteuergerät auf, welches die Einstellung von Übersetzungen respektive Schaltdrehzahlen ermöglicht. Durch eine übergeordnete Steuerungsvorrichtung lassen sich Motordrehzahl oder Übersetzung von einer Bedienperson vorgeben. Das an die Zugmaschine adaptierte, d.h. angekoppelte, angeschlossene oder angebaute, Anbaugerät kann von der Zugmaschine gezogen oder geschoben werden. Bei dem an die Zugmaschine adaptierten Anbaugerät ist auch eine auf eine Rahmenstruktur der Zugmaschine aufgesattelte Anordnung des Anbaugerätes denkbar. Das Motorsteuergerät stellt den Betriebspunkt entsprechend der Vorgabe durch die Bedienperson bei Volllast so ein, dass der Betriebspunkt entweder im Bereich maximaler Motorleistung oder im Bereich minimalen Kraftstoffverbrauchs liegt.

Im Regelfall ist die Bedienperson nicht mit der Motorcharakteristik vertraut, wodurch die vorgegebene Einstellung von Motordrehzahl und/oder Übersetzung nicht im optimalen Betriebspunkt liegen. Darüber hinaus bleiben weitere Einflüsse auf den Gesamtwirkungsgrad des Antriebsstranges unberücksichtigt.

Aus der DE 10 2016 118203 A1 ist ein Verfahren und eine Steuereinrichtung zur Steuerung eines Antriebsstranges eines landwirtschaftlichen Arbeitsfahrzeugs gemäß dem Oberbegriff des Anspruches 1 bekannt.

Es ist daher Aufgabe der Erfindung, eine Zugmaschine der eingangs genannten Art derart auszugestalten und weiterzubilden, dass die komplexen Zusammenhänge bei der Einstellungsoptimierung des Antriebsstranges der Zugmaschine und eines adaptierten Anbaugerätes besser erfasst und berücksichtigt werden.

Diese Aufgabe wird vorrichtungsseitig durch eine Zugmaschine mit den Merkmalen des Anspruches 1 gelöst. Weiterhin wird zur Lösung der Aufgabe ein Verfahren zum Betreiben einer Zugmaschine gemäß dem nebengeordneten Anspruch 17 vorgeschlagen.

Gemäß dem Anspruch 1 wird eine Zugmaschine, insbesondere Traktor, mit einem Antriebsstrang sowie wenigstens einem an die Zugmaschine adaptierten Anbaugerät vorgeschlagen, wobei der Antriebsstrang zumindest einen Antriebsmotor, ein Getriebe, zumindest einen Nebenabtrieb und zumindest ein Nebenaggregat umfasst. Die erfindungsgemäße Zugmaschine ist dadurch gekennzeichnet, dass die Zugmaschine zur Ansteuerung des Antriebsstranges ein Fahrerassistenzsystem aufweist, welches mit einer Recheneinheit, einer Speichereinheit sowie einer Ein-Ausgabeeinheit ausgeführt ist, wobei das Fahrerassistenzsystem einen kennlinienbasierend arbeitenden Motordrückungsautomaten umfasst, wobei der Motordrückungsautomat für eine optimierte Ansteuerung des Antriebsstrangs in Abhängigkeit von in der Speichereinheit hinterlegten auswählbaren Regelstrategien und/oder Optimierungszielgrößen eingerichtet ist. Das Fahrerassistenzsystem ermöglicht es einer Bedienperson der Zugmaschine, durch die Auswahl einer Regelstrategie und/oder einer oder mehrerer Optimierungszielgrößen ohne tiefer gehende Kenntnisse des Antriebsstranges der Zugmaschine eine Optimierung der Ansteuerung des Antriebsstranges zu erreichen. Dabei werden durch den kennlinienbasierend arbeitenden Motordrückungsautomaten Zusammenhänge im Antriebsstrang gesamtheitlich berücksichtigt, welche Einfluss auf die Regelstrategien bzw. auf die Optimierungszielgröße(n) haben. im Unterschied zum Stand der Technik soll nicht allein anhand eines spezifischen Kraftstoffverbrauchskennfeldes der nur für den Antriebsmotor spezifische Betriebspunkt bestimmt werden, sondern darüber hinaus sollen auch die Einflussgrößen im Antriebsstrang erfasst und berücksichtigt werden, die den optimalen Betriebspunkt des Antriebsmotors mit beeinflussen. Bei diesen Einflussgrößen handelt es sich unter anderem um die Wirkungsgradcharakteristik der weiteren zum Antriebsstrang gehörenden Komponenten. Weiterhin sind im Antriebsstrang auftretende, insbesondere drehzahlabhängige, Verluste als Einflussgröße zu nennen. Vorteilhafterweise können durch den Motordrückungsautomaten die in der Betriebspraxis auftretenden Streuungen von Wirkungsgraden und/oder variierenden Betriebsverhalten der Komponenten des Antriebsstranges berücksichtigt werden. Ebenso können die in der Betriebspraxis auftretenden Streuungen von Wirkungsgraden des Antriebsstranges bei unterschiedlichen Einsatzbedingungen der Zugmaschine berücksichtigt werden. Durch die erfindungsgemäße Zugmaschine kann das Gesamtsystem aus Zugmaschine mit Antriebsstrang und adaptiertem Anbaugerät auf Basis einer automatisierten Einstellung der Motordrückung ganzheitlich optimiert werden. Die Recheneinheit, die Speichereinheit sowie die Ein-Ausgabeeinheit des Fahrerassistenzsystems können räumlich voneinander getrennt vorliegen, d.h. sie müssen nicht zusammen auf der Zugmaschine angeordnet sein.

Der Begriff Regelstrategie bezeichnet eine übergeordnete Vorgabe einer Betriebsweise der Zugmaschine, ohne eine Vorgabe durch Auswahl einer oder mehrerer Regelgrößen. Der Begriff Optimierungszielgröße beschreibt eine konkrete Zielstellung unter Vorgabe einer oder mehrerer Regelgrößen, die durch die Ansteuerung des Antriebsstranges durch den Motordrückungsautomaten erreicht werden soll. Die jeweilige Optimierungszielgröße bildet einen spezifischen Unterabschnitt der Regelstrategie ab, deren Adaption zur Erreichung und Einhaltung der Regelstrategie vorzunehmen ist.

Der zumindest eine Antriebsmotor ist als Verbrennungsmotor ausgeführt. Der Antriebsstrang kann zusätzlich einen weiteren Antriebsmotor umfassen, der beispielsweise als Elektromotor ausgeführt ist. Das Getriebe ist bevorzugt als Lastschaltgetriebe oder stufenloses Getriebe ausgeführt. Ein Nebenaggregat des Antriebsstranges bildet beispielsweise ein Motorlüfter, eine Hydraulikpumpe oder ein elektrischer Generator. Als Nebenabtrieb ist insbesondere eine Zapfwelle anzusehen, welche dem Antrieb des Anbaugerätes dienen kann.

Das Anbaugerät für die Zugmaschine kann beispielsweise als Transportanhänger, Ladewagen, Schwader, Wender, Mähwerk, Ballenpresse, Bodenbearbeitungsgerät, Pflanzenschutzspritze oder Düngerstreuer ausgeführt sein.

Dazu kann der Antriebsstrang zusammen mit dem Fahrerassistenzsystem den Motordrückungsautomaten bilden, indem die Recheneinheit dazu eingerichtet ist, zur Umsetzung der jeweils ausgewählten Regelstrategie und/oder Optimierungszielgröße Parameter des Antriebsstranges autonom zu ermitteln und dem Antriebsstrang, vorzugsweise dem Antriebsmotor und/oder dem Getriebe, vorzugeben. Die Basis für die Ermittlung der Parameter des Antriebsstranges bildet die Auswahl einer der Regelstrategien bzw. von Optimierungszielgrößen, die in der Speichereinheit des Fahrerassistenzsystems hinterlegt sind. Mit der vorschlagsgemäßen Realisierung des Motordrückungsautomaten kann durch eine einmalige Auswahl der Regelstrategie bzw. von Optimierungszielgrößen durch die Bedienperson eine Art und Weise der Ansteuerung des Antriebsstranges vorgegeben werden. Für die Ermittlung der Parameter des Antriebsstranges im engeren Sinne ist eine weitere Eingabe vom Fahrer nicht erforderlich, da diese autonom erfolgt. Der Bedienperson kann aber die Möglichkeit eröffnet werden, beispielsweise die gewählte Regelstrategie und/oder eine Optimierungszielgröße auf Wunsch zu ändern, so dass daraufhin weiter eine autonome Ansteuerung des Antriebsstranges stattfindet, jedoch dann gegebenenfalls mit einer anderen Priorisierung.

Bevorzugt können die Regelstrategien zugmaschinenspezifische Strategien und/oder anbaugerätespezifische Strategien sein.

Insbesondere kann die auswählbare Regelstrategie zumindest eine Regelstrategie "Effizienz" oder "Leistung" umfassen. Mit der Regelstrategie "Effizienz" wird eine Optimierung des Kraftstoffverbrauchs pro Flächeneinheit durchgeführt, wobei der Betriebspunkt im n-dimensionalen Kennfeld unter Berücksichtigung der Parameter des Antriebsstranges im Bereich des minimal möglichen Kraftstoffverbrauchs liegt. Mit der Regelstrategie "Leistung" wird eine Optimierung der Flächenleistung durchgeführt, wobei der Betriebspunkt im n-dimensionalen Kennfeld unter Berücksichtigung der Parameter des Antriebsstranges im Bereich maximaler Motorleistung liegt. Dazu werden entsprechend der jeweiligen Regelstrategie die Motordrehzahl bei Volllast bzw. die Schaltdrehzahl des Getriebes unter Berücksichtigung der Parameter des Antriebsstranges variiert.

Die Optimierungszielgrößen können "Flächenleistung", "Flächenverbrauch", "Ertrag pro Fläche", "Kosten pro Fläche" und/oder "Arbeitsqualität" sein. Die Optimierungszielgröße "Kosten pro Fläche" kann beispielsweise vordergründig anfallende Personalkosten, Kraftstoffkosten, Verschleißkosten, Betriebsstunden und dergleichen mehr berücksichtigen. Die Optimierungszielgröße "Flächenleistung" kann beispielsweise vordergründig auf die Steigerung der bearbeiteten Fläche und/oder verarbeiteten Masse landwirtschaftlicher Güter gerichtet sein. Die Optimierungszielgröße "Arbeitsqualität" stellt beispielsweise die Einmischung von Ernterückständen, die Krümelung, die Rückverfestigung, die Futterqualität und dergleichen mehr bei der Ansteuerung des Antriebsstranges in den Vordergrund.

Dabei können die zur optimierten Ansteuerung des Antriebsstrangs zu berücksichtigenden Parameter Betriebsparameter des Antriebsstranges, des zumindest eines Nebenaggregates des Antriebsstranges, des Anbaugerätes und/oder Umgebungsbedingungen sein. Bevorzugt finden zumindest die Betriebsparameter des Antriebsstranges und des zumindest eines Nebenaggregates des Antriebsstranges Eingang in die optimierte Ansteuerung, da diese zumeist unmittelbar an der Zugmaschine erfasst werden können.

Bevorzugt können dem Antriebsstrang Sensoreinrichtungen zugeordnet sein, die zur Bestimmung von Betriebsparametern des Antriebsstranges eingerichtet sind. Dabei kann es sich bei einer der Sensoreinrichtungen beispielsweise um einen Drehzahlsensor, einen Drehmomentsensor, einen Drucksensor oder einen Kraftsensor handeln. Die Sensoreinrichtungen zur Bestimmung von Betriebsparametern des Antriebsstranges sind dem Antriebsstrang bzw. dessen Komponenten unmittelbar zugeordnet.

Weiterhin können der Zugmaschine und/oder dem Anbaugerät zusätzliche Sensoreinrichtungen zugeordnet sein, die zur Bestimmung von Betriebsinformationen der Zugmaschine und/oder des Anbaugerätes eingerichtet sind. Dabei kann es sich bei einer der Sensoreinrichtungen beispielsweise um einen Geschwindigkeitssensor, einen Neigungssensor, einen optischen Sensor und/oder einen Positionsortungssensor handeln.

Dabei können die Betriebsparameter des Antriebsstranges die Ausgangsleistung des zumindest einen Antriebsmotors, die Ausgangsleistung des Getriebes bzw. die Getriebeauslastung, die Antriebsleistung des zumindest einen Nebenaggregates und/oder des zumindest einen Nebenabtriebes, den Schlupf, die Fahrgeschwindigkeit, die Getriebeübersetzung und/oder den Leistungsfluss im Hydraulikantriebsstrang und/oder in einem optionalen elektrischen Antriebsstrang umfassen.

Des Weiteren können die Betriebsparameter des Anbaugerätes die Art und/oder den Typ des Anbaugerätes, die Hubposition und/oder die Arbeitstiefe des Anbaugerätes umfassen.

Insbesondere kann in der Speichereinheit ein funktionales Modell des Antriebsstranges hinterlegt sein, welches zumindest einen Teil der funktionalen Zusammenhänge des Antriebsstranges abbildet. So können mittels des funktionalen Modells die verschiedenen Betriebssituationen der Zugmaschine modelliert werden, um in der jeweiligen Betriebssituation und unter Berücksichtigung der ausgewählten Regelstrategie und/oder Optimierungszielgröße(n) eine optimierte Ansteuerung des Antriebsstrangs durch den Motordrückungsautomaten zu erreichen. Denkbar sind alternativ auch reine Black-Box-Modelle, die beispielsweise auf Künstlicher Intelligenz (KI) oder neuronalen Netzwerken basieren, oder Mischformen, um zumindest einen Teil der funktionalen Zusammenhänge des Antriebsstranges abzubilden.

Bevorzugt kann zur Abbildung der funktionalen Zusammenhänge des Antriebsstranges dem Betriebsparameter Motordrückung mindestens ein n-dimensionales Kennfeldes zugeordnet sein, wobei die Motordrückung als Ausgangsgröße des mindestens einen n-dimensionalen Kennfeldes definiert ist. Mittels des mindestens einen n-dimensionalen Kennfeldes lassen sich auch komplexe funktionale Zusammenhänge mit geringem rechnerischen Aufwand abbilden. Kennlinien des n-dimensionalen Kennfeldes können adaptiv an die jeweilige Situation angepasst werden, um Zusammenhänge im Antriebsstrang gesamtheitlich zu berücksichtigten, welche Einfluss auf die Regelstrategien bzw. auf die Optimierungszielgröße(n) haben. Die Anpassung der Kennlinien erfolgt dabei durch den Motordrückungsautomaten.

Weiterhin können zumindest ein oder mehrere Betriebsparameter des Antriebsstranges und des zumindest einen Nebenaggregates des Antriebsstranges die Eingangsgrößen des mindestens einen n-dimensionalen Kennfeldes sein. So können als Eingangsgrößen die Betriebsparameter Ausgangsleistung des zumindest einen Antriebsmotors, Ausgangsleistung des Getriebes, Getriebeauslastung, Antriebsleistung des zumindest einen Nebenaggregates und/oder dem zumindest einen Nebenabtrieb, Schlupf, Leistungsfluss im Nebenabtriebsstrang und/oder Leistungsfluss im Hydraulikantriebsstrang und /oder einem elektrischen Antriebsstrang vorgesehen sein.

Vorzugsweise kann die Recheneinheit das mindestens eine n-dimensionale Kennfeld in Abhängigkeit von der ausgewählten Regelstrategie und/oder Optimierungszielgröße(n) auswählen und der Ermittlung der Motordrückung zugrunde legen.

Gemäß einer bevorzugten Weiterbildung kann die Recheneinheit das mindestens eine n-dimensionale Kennfeld im laufenden Betrieb, insbesondere zyklisch, mit den Einsatzbedingungen der Zugmaschine abgleichen, vorzugsweise, dass in der Speichereinheit mindestens ein n-dimensionales Initialkennfeld hinterlegt ist und dass bei der ersten Ermittlung der Motordrückung die Recheneinheit die Ermittlung basierend auf dem Initialkennfeld vornimmt.

Dabei kann die Recheneinheit dazu eingerichtet sein, eine Anpassung der Ausprägung des Initialkennfeldes an bestehende Einsatzbedingungen durch die Verwendung gemessener Parameter des Antriebsstranges oder das Anfahren von Stützstellen im Initialkennfeld durchzuführen. Wenn im n-dimensionalen Raum des Initialkennfeldes gemessene Parameter fehlen oder nur in unzureichender Menge vorliegen, wobei diese im standardmäßigen Betrieb des Antriebsstranges nicht angefahren werden, können stattdessen Stützstellen angefahren werden. Ausgehend von dem Initialkennfeld kann durch das Einstellen von vordefinierten Betriebspunkten, die Stützstellen im Kennfeld darstellen, die Ausprägung des Kennfelds an die aktuellen Einsatzbedingungen angepasst werden.

Im laufenden Betrieb der Zugmaschine kann die genaue Ausprägung des mindestens einen n-dimensionalen Kennfelds durch Ermitteln zumindest eines der im Kennfeld aufgetragenen Parameter an die aktuellen Einsatzbedingungen angepasst werden. Im Arbeitsbetrieb der Zugmaschine unterliegen die Einsatzbedingungen starken Schwankungen, die durch den Motordrückungsautomaten zeitnah erfasst und berücksichtigt werden können, um den Betrieb gemäß der ausgewählten Regelstrategie und/oder der ausgewählten Optimierungszielgröße(n) zu optimieren. Zeitnah heißt, dass der Motordrückungsautomat innerhalb von Sekunden auf Änderungen reagieren kann.

Die Kenntnis des Kennfelds ermöglicht es dem Motordrückungsautomaten zur automatischen Einstellung der Motordrückung die Motordrückung so zu verstellen, dass das Verhalten des Antriebsstranges entsprechend der jeweiligen Regelstrategie und/oder der Optimierungszielgröße(n) optimiert wird. Dabei bildet die Motordrückung die Stellgröße.

Weiterhin wird die eingangs gestellte Aufgabe durch ein Verfahren zum Betreiben einer Zugmaschine mit den Merkmalen des nebengeordneten Anspruches 17 gelöst.

Gemäß dem nebengeordneten Anspruch 17 wird ein Verfahren zum Betreiben einer Zugmaschine, insbesondere eines Traktors, vorgeschlagen, mit einem Antriebsstrang sowie wenigstens einem an die Zugmaschine adaptierten Anbaugerät, wobei der Antriebsstrang zumindest einen Antriebsmotor, ein Getriebe, zumindest ein Nebenaggregat und zumindest einen Nebenabtrieb umfasst, wobei der Antriebsstrang durch ein Fahrerassistenzsystem der Zugmaschine angesteuert wird, welches mit einer Recheneinheit, einer Speichereinheit sowie einer Ein-Ausgabeeinheit ausgeführt ist, wobei der Antriebsstrang durch einen kennlinienbasierend arbeitenden Motordrückungsautomaten des Fahrerassistenzsystems angesteuert wird, wobei für einen optimierten Betrieb der Antriebsstrang von dem Motordrückungsautomat in Abhängigkeit von in der Speichereinheit hinterlegten auswählbaren Regelstrategien und/oder Optimierungszielgrößen angesteuert wird. Durch das Verfahren kann das Gesamtsystem aus Zugmaschine mit Antriebsstrang und adaptiertem Anbaugerät auf Basis einer Einstellung der Motordrückung ganzheitlich optimiert werden. Dabei werden vorteilhafterweise durch das Verfahren auch die in der Praxis auftretenden Streuungen von Wirkungsgraden und/oder Betriebsverhalten der verschiedenen Komponenten des Antriebsstranges welche die von dem Antriebsmotor einenends an den Antriebsstrang abgegebene Leistung und der zur Verfügung stehenden Zugleistung am anderen Ende des Antriebsstranges berücksichtigt.

Die vorliegende Erfindung wird nachstehend anhand eines in den Zeichnungen dargestellten Ausführungsbeispieles näher erläutert.

Es zeigen:
- Fig. 1: eine schematische Darstellung einer Zugmaschine und eines an die Zugmaschine adaptierten Anbaugerätes;
- Fig. 2: eine schematische Darstellung eines Antriebsstranges der Zugmaschine;
- Fig. 3: eine Detailansicht eines Fahrerassistenzsystems der Zugmaschine;
- Fig. 4: exemplarisch ein n-dimensionales Kennfeld 40 zur Ansteuerung des Antriebsstranges der Zugmaschine; und
- Fig. 5: exemplarisch ein Initialkennfeld, welches aufgrund einer Änderung eines Betriebsparameters im Antriebsstrang adaptiert wird.

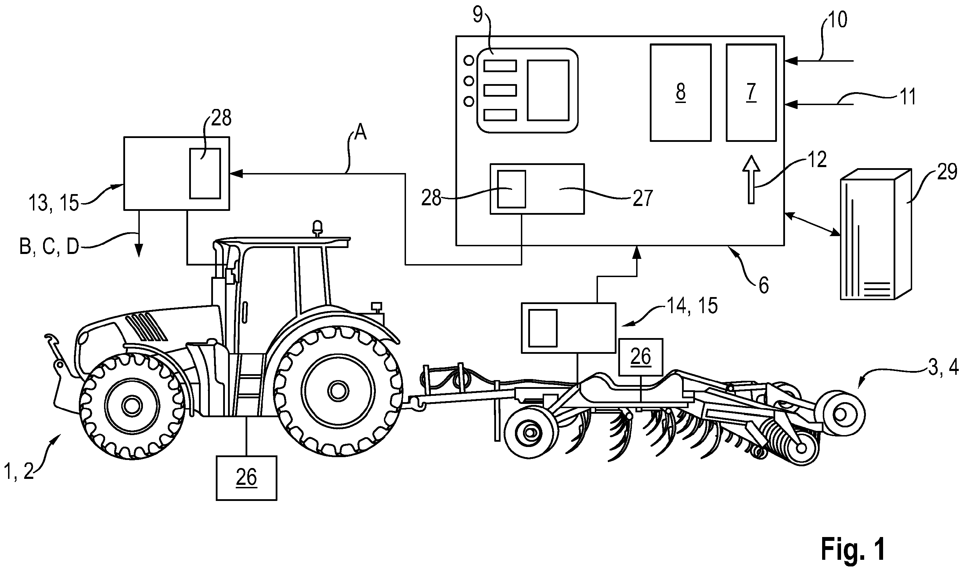

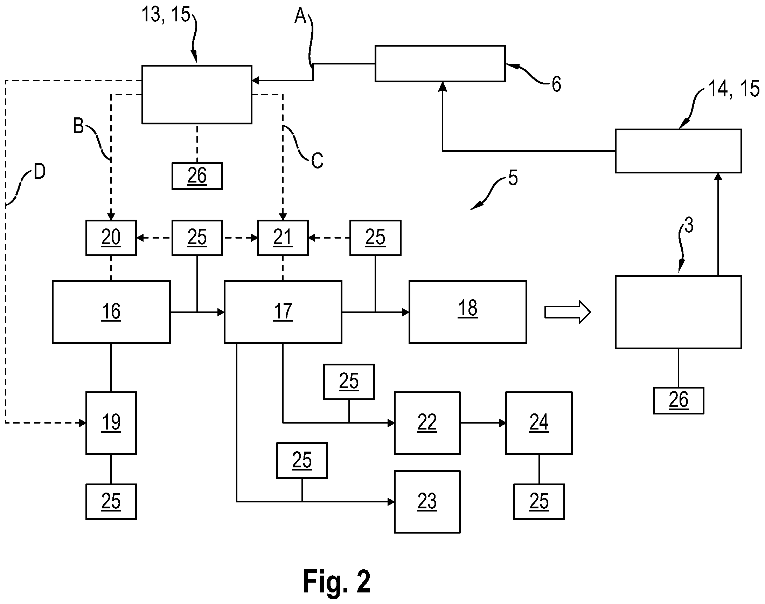

Die in Fig. 1 dargestellte landwirtschaftliche Maschinenanordnung umfasst eine als Traktor 2 ausgeführte Zugmaschine 1 und zumindest ein an die Zugmaschine 1 adaptiertes Anbaugerät 3. Das Anbaugerät 3 ist im dargestellten Ausführungsbeispiel als Bodenbearbeitungsgerät 4 - hier als sogenannter Grubber ausgeführt. Es liegt im Rahmen der Erfindung, dass das Anbaugerät 3 als beliebiges Anbaugerät, wie etwa als Transportanhänger, Ladewagen, Schwader, Wender, Mähwerk, Ballenpresse, sonstiges Bodenbearbeitungsgeräte, etwa als Pflug, Pflanzenschutzspritze oder Düngerstreuer ausgeführt ist. Die Zugmaschine 1 umfasst einen Antriebsstrang 5, welcher in Fig. 2 schematisch dargestellt ist. In noch näher zu beschreibender Weise ist der Zugmaschine 1 zur Ansteuerung des Antriebsstranges 5 ein Fahrerassistenzsystem 6 zugeordnet. Das erfindungsgemäße Fahrerassistenzsystem 6 umfasst zumindest eine Recheneinheit 7, eine Speichereinheit 8 und eine Ein-Ausgabeeinheit 9. Die Recheneinheit 7 verarbeitet von maschineninternen Sensoreinrichtungen 25, 26 der Zugmaschine 1 und/oder des Anbaugerätes 3 generierte Informationen 10, externe Informationen 11 und in der Recheneinheit 7 hinterlegbare Informationen 12. Zudem sind der Zugmaschine 1 und dem Anbaugerät 3 eine oder mehrere Steuervorrichtungen 13, 14 zur Steuerung und Regelung der Zugmaschine 1 und/oder des jeweiligen Anbaugerätes 3 zugeordnet. Es liegt im Rahmen der Erfindung, dass der Zugmaschine 1 und dem Anbaugerät 3 entweder separate Steuervorrichtungen 13, 14 zur Ansteuerung oder eine gemeinsame Steuereinheit 15 zugeordnet sind. Die gemeinsame Steuereinheit 15 kann dann entweder auf der Zugmaschine 1 oder dem Anbaugerät 3 positioniert sein. Es liegt im Rahmen der Erfindung, dass die Ein-Ausgabeeinheit 9 auch mobil ausgestaltet sein kann, sodass sie von einer Bedienperson der Zugmaschine 1 mitführbar ist. Denkbar ist auch ein entfernter Betrieb des Fahrerassistenzsystems 6 mittels Remote-Zugriffs. Das Fahrerassistenzsystem 6 kann auch auf einer Daten-Cloud basierend ausgeführt sein, indem Daten nicht in der Speichereinheit 8, sondern zumindest teilweise in einer externen, räumlich entfernten Speichervorrichtung eines externen Servers 29 abrufbar und editierbar hinterlegt sind.

Das Fahrerassistenzsystem 6 umfasst einen kennlinienbasierend arbeitenden Motordrückungsautomaten 27, welcher eine Optimierung des Betriebs des Antriebsstranges der Zugmaschine 1 bewirkt. Im einfachsten Fall wird dies dadurch bewirkt, dass der Motordrückungsautomaten 27 Steuersignale A generiert, die zumindest der Steuervorrichtung 13 bzw. der Steuereinheit 15 der Zugmaschine 1 zugeführt werden und dort die Ansteuerung der Komponenten des Antriebsstranges 5 der Zugmaschine 1 durch Generierung entsprechender Steuersignale B, C, D bewirken.

In Fig. 2 ist schematisch der Antriebsstrang 5 der Zugmaschine 1 dargestellt. Der Antriebsstrang 5 umfasst zumindest einen Antriebsmotor 16, ein Getriebe 17, zumindest einen Nebenabtrieb 18 und zumindest ein Nebenaggregat 19. Der Antriebsmotor 16 ist als Verbrennungsmotor ausgeführt. Der Antriebsmotor 16 wird durch ein Motorsteuergerät 20 angesteuert. Das Getriebe 17 ist als Lastschaltgetriebe oder als stufenloses Getriebe ausgeführt. Das Getriebe 17 wird durch ein Getriebesteuergerät 21 angesteuert. Der zumindest eine Nebenabtrieb 18 ist als eine Zapfwelle ausgeführt, die dem Antrieb des Anbaugerätes 3 dient. Das zumindest eine Nebenaggregat 19 kann als Motorlüfter ausgebildet sein, welcher Teil einer Kühlvorrichtung des Antriebsmotors 16 ist. Weiterhin kann der Antriebsstrang 5 einen Hydraulikantriebsstrang 22 und/oder einen elektrischen Antriebsstrang 23 aufweisen. Dabei können beispielsweise eine Hydraulikpumpe und ein Hydraulikmotor oder ein Generator sowie ein Elektromotor weitere Nebenaggregate 19 des Antriebsstranges 5 bilden. Der Hydraulikantriebsstrang 22 dient beispielsweise zum Betreiben eines Hubkrafthebers 24, mit welchem das Anbaugerät 3 an die Zugmaschine 1 adaptiert wird.

Dem Antriebsstrang 5 sind Sensoreinrichtungen 25 zugeordnet sind, die zur Bestimmung von Betriebsparametern des Antriebsstranges 5 respektive dessen unterschiedlichen Komponenten eingerichtet sind. Dabei kann es sich bei den Sensoreinrichtungen 25 beispielsweise um einen Drehzahlsensor, einen Drehmomentsensor, einen Drucksensor oder einen Kraftsensor handeln. Die Sensoreinrichtungen 25 zur Bestimmung von Betriebsparametern des Antriebsstranges 5 sind dem Antriebsstrang 5 unmittelbar zugeordnet. Weiterhin können der Zugmaschine 1 und/oder dem Anbaugerät 3 zusätzliche Sensoreinrichtungen 26 zugeordnet sein, die zur Bestimmung von spezifischen Betriebsinformationen der Zugmaschine 1 und/oder des Anbaugerätes 3 eingerichtet sind. Dabei kann es sich bei einer der zusätzlichen Sensoreinrichtungen 26 beispielsweise um einen Geschwindigkeitssensor, einen Neigungssensor, einen optischen Sensor und/oder einen Positionsortungssensor handeln. Des Weiteren kann zumindest eine der zusätzlichen Sensoreinrichtungen 26 zum Empfang und/oder zur Bestimmung von satellitenbasierten oder satellitengestützen Informationen, wie Geodaten oder Bewuchsdaten eingerichtet sein. Die Sensoreinrichtungen 25 des Antriebsstranges als auch die weiteren Sensoreinrichtungen 26 der Zugmaschine 1 und/oder des Anbaugerätes 3 übermitteln die generierten Informationen 10 mittelbar oder unmittelbar an das Fahrerassistenzsystem 6. Die Recheneinheit 7 ist zur Auswertung der Informationen 10 eingerichtet. Die Kommunikation zwischen dem Motorsteuergerät 20, dem Getriebesteuergerät 21, den Sensoreinrichtungen 25, 26 sowie den separaten Steuervorrichtungen 13, 14 bzw. der Steuereinheit 15 und dem Fahrerassistenzsystem 6 kann über verschiedene Kommunikationswege, wie beispielsweise ein Bussystem der Zugmaschine 1 oder des Anbaugerätes 3 oder ein drahtloses Kommunikationssystem, erfolgen.

Der Antriebsstrang 5 bildet zusammen mit dem Fahrerassistenzsystem 6 den Motordrückungsautomat 27. Dabei kann das Fahrerassistenzsystem 6 ein dem Motordrückungsautomat 27 zugeordnetes Regelwerk 28 umfassen welches eine Optimierung der Arbeitsweise der Zugmaschine 1 bewirkt. Weiter liegt es im Rahmen der Erfindung, dass das Regelwerk 28 zur Optimierung der Arbeitsweise des Antriebsstranges 5 in der der Zugmaschine 1 zugeordneten, vorzugsweise als Jobrechner ausgeführten, Steuervorrichtung 13 hinterlegt ist. Es liegt zudem im Rahmen der Erfindung, dass das benötigte Regelwerk 28 auch zentral auf einem nicht näher erläuterten externen Server 29 oder einem sonstigen Backendsystem, beispielsweise auf einer Daten-Cloud basierend, hinterlegt sein kann und durch eine Kommunikationsverbindung zwischen der Zugmaschine 1 und dem Server 29 abrufbar ist.

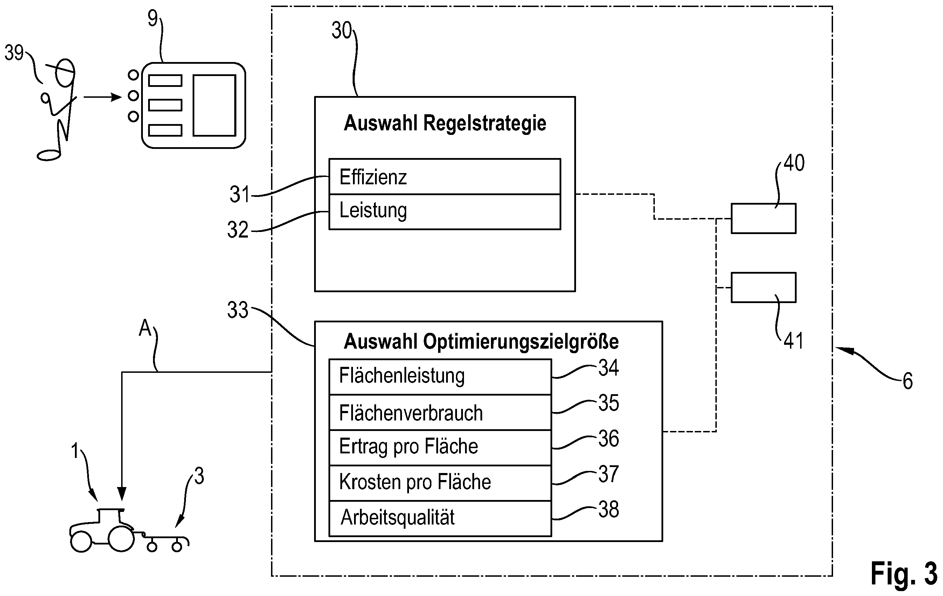

Die Darstellung in Fig. 3 zeigt eine Detailansicht des Fahrerassistenzsystems 6 der Zugmaschine 1 respektive des Traktors 2, wobei Visualisierungs-, Bedien- und strukturelle Aspekt in ein und derselben Darstellung zusammengefasst sind. Zur Optimierung der Arbeitsweise des Antriebsstranges 5 der Zugmaschine 1 umfasst das Fahrerassistenzsystem 6 auswählbare Regelstrategien 30, wobei die auswählbaren Regelstrategien 30 zugmaschinenspezifische Strategien, anbaugerätespezifische Strategien und/oder eine Kombination aus beiden sind. Eine effiziente Optimierung des Antriebsstranges 5 der Zugmaschine 1 unter Berücksichtigung des adaptierten Anbaugerätes 3 ergibt sich dann, wenn die auswählbaren Regelstrategien 30 zumindest eine der Regelstrategien "Effizienz" 31, "Leistung" 32 umfassen. Mit der Regelstrategie "Effizienz" 31 wird eine Optimierung des Kraftstoffverbrauchs pro Flächeneinheit durchgeführt, d.h. ein Betrieb des Antriebsmotors 16 im Bereich des minimal möglichen Kraftstoffverbrauchs unter Berücksichtigung aller Komponenten des gesamten Antriebsstranges 5. Mit der Regelstrategie "Leistung" 32 wird eine Optimierung der Flächenleistung durchgeführt, wobei der Betriebspunkt unter Berücksichtigung der Parameter des Antriebsstranges 5 im Bereich maximaler Motorleistung liegt.

Weiterhin umfasst das Fahrerassistenzsystem 6 zur Optimierung der Arbeitsweise des Antriebsstranges 5 der Zugmaschine 1 auswählbare Optimierungszielgrößen 33. Die Optimierungszielgrößen 33 sind alternativ oder zusätzlich zu den Regelstrategien 30 durch eine Bedienperson 39 auswählbar.

Das Fahrerassistenzsystem 6 kann zudem so beschaffen sein, dass es entweder in einem Dialogmodus 40 mit der Bedienperson 39 oder in einem Automatikmodus 41 betrieben werden kann. In beiden Fällen findet die Kommunikation, der Dialog mit der Bedienperson 39, natürlichsprachig statt.

Die Optimierungszielgrößen 33 können "Flächenleistung" 34, "Flächenverbrauch" 35, "Ertrag pro Fläche" 36, "Kosten pro Fläche" 37 und/oder "Arbeitsqualität" 38 sein. Die Optimierungszielgröße 33 "Flächenleistung" 34 kann beispielsweise vordergründig auf die Steigerung der bearbeiteten Fläche und/oder verarbeiteten Masse landwirtschaftlicher Güter pro Zeiteinheit (ha/h) gerichtet sein. Die Optimierungszielgröße 33 "Flächenverbrauch" 35 zielt auf eine Minimierung des Kraftstoffverbrauchs je Flächeneinheit (l/ha) ab. Die Optimierungszielgröße 33 "Ertrag pro Fläche" 36 zielt auf eine Maximierung des Ertrags ab. Die Optimierungszielgröße 33 "Kosten pro Fläche" 37 kann beispielsweise vordergründig anfallende Personalkosten, Kraftstoffkosten, Verschleißkosten, Betriebsstunden und dergleichen mehr berücksichtigen. Die Optimierungszielgröße 33 "Arbeitsqualität" 38 stellt beispielsweise die Einmischung von Ernterückständen, die Krümelung, die Rückverfestigung, die Futterqualität und dergleichen mehr bei der Ansteuerung des Antriebsstranges 5 in den Vordergrund.

Der Antriebsstrang 5 bildet zusammen mit dem Fahrerassistenzsystem 6 den Motordrückungsautomat 27, indem die Recheneinheit 7 des Fahrerassistenzsystem 6 dazu eingerichtet ist, zur Umsetzung der jeweils ausgewählten Regelstrategie 30 und/oder Optimierungszielgröße 33 Parameter des Antriebsstranges 5 autonom zu ermitteln und dem Antriebsstrang 5, vorzugsweise dem Antriebsmotor 16 und/oder dem Getriebe 17, vorzugeben. Dies kann durch das Übermitteln der Steuersignale A an die Steuervorrichtung 13 bzw. Steuereinheit 15 erfolgen, welche daraufhin entsprechende Steuersignale B, C an das Motorsteuergerät 20 und/oder das Getriebesteuergerät 21 übermittelt.

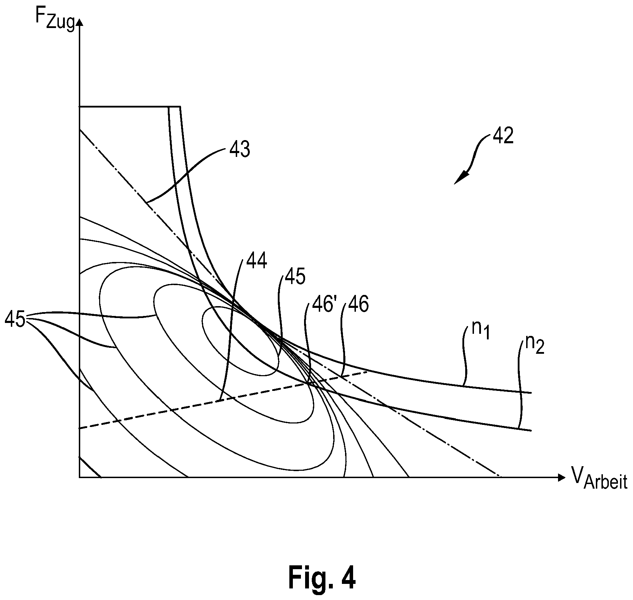

Der Motordrückungsautomat 27 ist für eine optimierte Ansteuerung des Antriebsstrangs 5 in Abhängigkeit von den in der Speichereinheit 8 hinterlegten auswählbaren Regelstrategien 30 und/oder Optimierungszielgrößen 33 eingerichtet. Der Motordrückungsautomat 27 des Fahrerassistenzsystems 6 arbeitet kennlinienbasierend. Hierzu ist in der Speichereinheit 8 zumindest ein n-dimensionales Kennfeld 42 hinterlegt, welches anhand der Darstellung gemäß der Fig. 4 noch näher erläutert wird. Das zumindest eine n-dimensionales Kennfeld 42 ist Teil des Regelwerkes 28. Hierzu variiert der Motordrückungsautomat 27 die Motordrehzahl bzw. Motordrückung n₁, n₂ bei Volllast bzw. die Schaltdrehzahl und gibt dabei den "Flächenverbrauch" 35 - Kraftstoffverbrauch pro Fläche (l/ha) - und/oder die "Flächenleistung" 34 - bearbeitete Fläche pro Stunde (ha/h) - über der Motordrehzahl bei Volllast bzw. Schaltdrehzahl vor. Hierzu werden von den Sensoreinrichtungen 25 erfasste Signale, wie die Motordrehzahl bzw. Motordrückung n₁, n₂, von dem Motordrückungsautomat 27 ausgewertet und in dem n- dimensionalen Kennfeld 42 hinterlegt.

Fig. 4 zeigt exemplarisch ein n-dimensionales Kennfeld 42 zur Ansteuerung des Antriebsstranges 5. In der Speichereinheit 8 ist ein funktionales Modell des Antriebsstranges 5 hinterlegt, welches zumindest einen Teil der funktionalen Zusammenhänge des Antriebsstranges 5 abbildet. Denkbar sind auch reine Black-Box-Modelle, die beispielsweise auf Künstlicher Intelligenz (KI) oder neuronalen Netzwerken basieren, oder Mischformen, um zumindest einen Teil der funktionalen Zusammenhänge des Antriebsstranges 5 abzubilden. Zur Abbildung der funktionalen Zusammenhänge des Antriebsstranges 5 ist dem Betriebsparameter Motordrückung n₁, n₂ das mindestens eine n-dimensionale Kennfeld 42 zugeordnet, wobei die Motordrückung n₁, n₂ als Ausgangsgröße des mindestens einen n-dimensionalen Kennfeldes 42 definiert ist.

In dem Kennfeld 42 sind als Eingangsgrößen die Arbeitsgeschwindigkeit v_{Arbeit} über die Zugkraft F_{Zug} aufgetragen. Die Ausgangsgröße bildet die Motordrückung n₁, n₂. Des Weiteren ist mit Bezugszeichen 43 die Zugkraftkennlinie der Zugmaschine und mit Bezugszeichen 44 die Zugkraftkennlinie des Anbaugeräts 3 bezeichnet, die in dem Kennfeld 42 exemplarisch dargestellt sind. Weiterhin sind Linien 45 konstanten spezifischen Kraftstoffverbrauchs in Form von sogenannten "Muschelkennlinien" im Hintergrund dargestellt. Der Schnittpunkt der Zugraftkennlinie 43 des Anbaugerätes 3 und der Zugmaschine 1 definiert einen sich bei Volllast bei verschiedenen Einstellungen der Motordrückung ergebenden Betriebspunkt 46. Die Linien 45 konstanten spezifischen Kraftstoffverbrauchs können bei bekannter Konfiguration des Antriebsstranges 5 für einen spezifischen Betriebszustand berechnet werden. Ein spezifischer Betriebszustand kann durch Betriebsparameter des Antriebsstranges 5, des zumindest eines Nebenaggregates 19 des Antriebsstranges 5, des Anbaugerätes 3 und/oder Umgebungsbedingungen festgelegt werden. Die Betriebsparameter des Antriebsstranges 5, des zumindest eines Nebenaggregates 19, des Anbaugerätes 3, des Hydraulikantriebsstranges 22, des elektrischen Antriebsstranges 23 und/oder Umgebungsbedingungen bilden die zur optimierten Ansteuerung des Antriebsstranges 5 zu berücksichtigenden Parameter.

Die Betriebsparameter des Antriebsstranges 5 umfassen die Ausgangsleistung des zumindest einen Antriebsmotors 16, die Ausgangsleistung des Getriebes 17 bzw. die Getriebeauslastung, die Antriebsleistung des zumindest einen Nebenaggregates 19 und/oder des zumindest einen Nebenabtriebs 18, den Schlupf, die Fahrgeschwindigkeit, die Getriebeübersetzung und/oder den Leistungsfluss im Antriebsstrang des Nebenabtriebs 18, im Hydraulikantriebsstrang 22 oder im elektrischen Antriebsstrang 23. So kann beispielsweise die Antriebsleistung zumindest einen Nebenaggregates 19 aus der Differenz von Ausgangsleistung des Antriebsmotors 16 und der Ausgangsleistung des Getriebes 17 unter Berücksichtigung des Getriebewirkungsgradkennfeldes ermittelt werden.

Des Weiteren können die Betriebsparameter des Anbaugerätes 3 die Art und/oder den Typ des Anbaugerätes 3, die Hubposition und/oder die Arbeitstiefe des Anbaugerätes 3 umfassen.

Mit der Regelstrategie "Effizienz" wird eine Optimierung des Kraftstoffverbrauchs pro Flächeneinheit durchgeführt, wobei der Betriebspunkt 46 im n-dimensionalen Kennfeld 42 unter Berücksichtigung der Parameter des Antriebsstranges 5 im Bereich des minimal möglichen spezifischen Kraftstoffverbrauchs liegt. Mit der Regelstrategie "Leistung" wird eine Optimierung der Flächenleistung durchgeführt, wobei der Betriebspunkt 46 im n-dimensionalen Kennfeld 42 unter Berücksichtigung der Parameter des Antriebsstranges 5 im Bereich maximaler Motorleistung liegt. Dazu werden entsprechend der jeweiligen Regelstrategie die Motordrückung n₁, n₂ bei Volllast bzw. die Schaltdrehzahl des Getriebes 17 unter Berücksichtigung der Parameter des Antriebsstranges 5 variiert.

Gemäß dem in Fig. 4 beispielhaft dargestellten Kennfeld 42 wird durch den Motordrückungsautomaten 27 die Optimierungszielgröße "Flächenverbrauch" dadurch optimiert, dass die Motordrückung n₁ auf die Motordrückung n₂ umgestellt wird, so dass sich ein Betriebspunkt 46' einstellt, der auf der Kennlinie 44 des Zugkraftbedarfs des Anbaugerätes 3 unter Volllast näher am Bereich des minimal möglichen spezifischen Kraftstoffverbrauchs im Kennfeld 42 liegt.

Die Recheneinheit 7 kann das mindestens eine n-dimensionale Kennfeld 42 im laufenden Betrieb, insbesondere zyklisch, mit den Einsatzbedingungen der Zugmaschine 1 abgleichen. Hierzu kann vorzugsweise in der Speichereinheit 8 mindestens ein n-dimensionales Initialkennfeld 42` hinterlegt sein. Somit kann die Recheneinheit 7 des Fahrerassistenzsystems 6 bei der ersten Ermittlung der Motordrückung n₁, n₂ die Ermittlung basierend auf dem Initialkennfeld 42' vornehmen.

Des Weiteren kann die Recheneinheit 7 dazu eingerichtet sein, eine Anpassung der Ausprägung des Initialkennfeldes 42' an bestehende Einsatzbedingungen durch die Verwendung gemessener Betriebsparameter oder das Anfahren von Stützstellen im Initialkennfeld 42' durchzuführen. Ausgehend von dem Initialkennfeld 42' kann durch das Einstellen von vordefinierten Betriebspunkten, die Stützstellen in dem Kennfeld 42 darstellen, welche im normalen Betrieb des Antriebsstranges 5 nicht ermittelt werden, die Ausprägung des Kennfeldes 42 an die aktuellen Einsatzbedingungen angepasst werden. Hierzu werden in einem ersten Schritt Bemessungswerte respektive Betriebsparameter mittels der jeweiligen Sensoreinrichtungen 25, 26 akquiriert und durch die Recheneinheit 7 vorverarbeitet. Sind die Bemessungswerte, beispielsweise Drehzahlen, Kräfte, Schlupf, quasistationär, so werden diese in das n-dimensionale Initialkennfeld eingetragen. Wenn im n-dimensionalen Raum des Initialkennfeldes 42' durch die Sensoreinrichtungen 25, 26 bestimmte Bemessungswerte fehlen, weil diese bei regulärer Feldfahrt nicht auftreten oder nur unzureichend vorliegen, da diese im standardmäßigen Betrieb des Antriebsstranges nicht angefahren werden, können stattdessen Stützstellen angefahren werden. Der zweite Schritt umfasst die Prüfung und Adaption des funktionalen Modells des Antriebsstranges 5 auf Basis von Änderungen der aktuellen Einsatzbedingungen, die wiederum mittels der Betriebsparameter bestimmt werden.

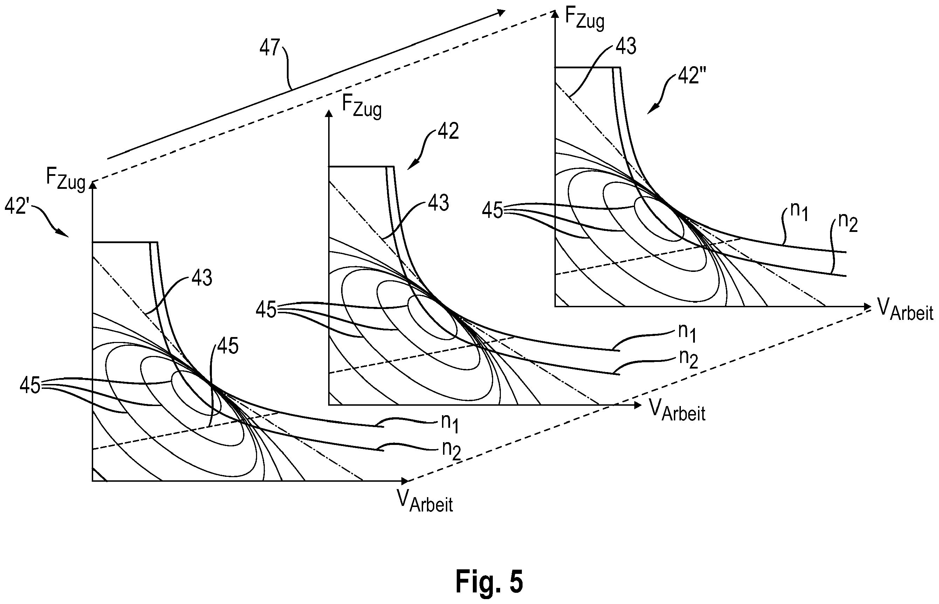

Die Darstellung in Fig. 5 zeigt exemplarisch ein n-dimensionales Initialkennfeld 42', welches aufgrund einer Änderung zumindest eines Betriebsparameters im Antriebsstrang 5 adaptiert wird. Bei dem Betriebsparameter handelt es sich beispielhaft um die Drehzahl des als Motorlüfter ausgeführten Nebenaggregates 19, welche im Betrieb in Abhängigkeit von der Belastung des Antriebsmotors 16 ansteigt, wie in Fig. 5 durch den Pfeil 47 veranschaulicht ist. Die Zunahme 47 der Drehzahl des Motorlüfters führt zu einer Adaption des Initialkennfeldes 42' hin zum Kennfeld 42 bzw. Kennfeld 42".

Durch die vorstehende Beschreibung zu den Fig. 1 bis 5 wird verdeutlicht, dass z.B. die Regelstrategien 30 und/oder die Optimierungszielgrößen 33 nicht lediglich auf der Basis eines für den jeweiligen Antriebsmotor 16 spezifischen Kraftstoffverbrauchskennfeldes erfolgt, sondern unter Berücksichtigung einer oder mehrerer Komponenten des Antriebsstranges 5. Somit wird der Antriebsstrang 5 als Ganzes durch den Motordrückungsautomaten 27 auf Basis einer Einstellung der Motordrückung n₁, n₂ ganzheitlich optimiert. Dabei können durch das Fahrerassistenzsystem 6 und den Motordrückungsautomaten 27 die in der Praxis auftretenden Streuungen von Wirkungsgraden und/oder Betriebsverhalten der Komponenten des Antriebsstranges 5 berücksichtigt werden.

### Bezugszeichenliste

| | | | |
|---|---|---|---|
| 1 | Zugmaschine | 31 | Effizienz |
| 2 | Traktor | 32 | Leistung |
| 3 | Anbaugerät | 33 | Optimierungszielgröße |
| 4 | Bodenbearbeitungsgerät | 34 | Flächenleistung |
| 5 | Antriebsstrang | 35 | Flächenverbrauch |
| 6 | Fahrerassistenzsystem | 36 | Ertrag pro Fläche |
| 7 | Recheneinheit | 37 | Kosten pro Fläche |
| 8 | Speichereinheit | 38 | Arbeitsqualität |
| 9 | Ein-Ausgabeeinheit | 39 | Bedienperson |
| 10 | Information | 40 | Dialogmodus |
| 11 | Externe Information | 41 | Automatikmodus |
| 12 | Information | 42 | Kennfeld |
| 13 | Steuervorrichtung | 42' | Initialkennfeld |
| 14 | Steuervorrichtung | 42" | Adaptiertes Kennfeld |
| 15 | Steuereinheit | 43 | Zugkraftkennlinie von 1, 2 |
| 16 | Antriebsmotor | 44 | Zugkraftkennlinie von 3, 4 |
| 17 | Getriebe | 45 | Linie konstanten Kraftstoffverbrauchs |
| 18 | Nebenabtrieb | 46 | Betriebspunkt |
| 19 | Nebenaggregat | 46' | Betriebspunkt |
| 20 | Motorsteuergerät | 47 | Pfeil |
| 21 | Getriebesteuergerät | | |
| 22 | Hydraul ikantriebsstrang | A | Steuersignal |
| 23 | Elektrischer Antriebsstrang | B | Steuersignal |
| 24 | Hubkraftheber | C | Steuersignal |
| 25 | Sensoreinrichtung | D | Steuersignal |
| 26 | Sensoreinrichtung | F_{Zug} | Zugkraft von 1, 2 |
| 27 | Motordrückungsautomat | n₁ | |
| 28 | Regelwerk | n₂ | |
| 29 | Server | V_{Arbeit} | Arbeitsgeschwindigkeit |
| 30 | Regelstrategie | | |

## Patentansprüche

1. Zugmaschine (1), insbesondere Traktor (2), mit einem Antriebsstrang (5) sowie wenigstens einem an die Zugmaschine (1) adaptierten Anbaugerät (3,4), wobei der Antriebsstrang (5) zumindest einen Antriebsmotor (16), ein Getriebe (17), zumindest einen Nebenabtrieb (18) und zumindest ein Nebenaggregat (19) umfasst, **dadurch gekennzeichnet, dass** die Zugmaschine (1) zur Ansteuerung des Antriebsstranges (5) ein Fahrerassistenzsystem (6) aufweist, welches mit einer Recheneinheit (7), einer Speichereinheit (8) sowie einer Ein-Ausgabeeinheit (9) ausgeführt ist, wobei das Fahrerassistenzsystem (6) einen kennlinienbasierend arbeitenden Motordrückungsautomaten (27) umfasst, wobei der Motordrückungsautomat (27) für eine optimierte Ansteuerung des Antriebsstranges (5) in Abhängigkeit von in der Speichereinheit (8) hinterlegten auswählbaren Regelstrategien (30) und/oder Optimierungszielgrößen (33) eingerichtet ist.

2. Zugmaschine (1) nach Anspruch 1, **dadurch gekennzeichnet, dass** der Antriebsstrang (5) zusammen mit dem Fahrerassistenzsystem (6) den Motordrückungsautomaten (27) bildet, indem die Recheneinheit (7) dazu eingerichtet ist, zur Umsetzung der jeweils ausgewählten Regelstrategie (30) und/oder Optimierungszielgröße (33) Parameter des Antriebsstranges (5) autonom zu ermitteln und dem Antriebsstrang (5), vorzugsweise dem Antriebsmotor (16) und/oder dem Getriebe (17), vorzugeben.

3. Zugmaschine (1) nach Anspruch 1 oder 2, **dadurch gekennzeichnet, dass** die Regelstrategien (30) zugmaschinenspezifische Strategien und/oder anbaugerätespezifische Strategien sind.

4. Zugmaschine (1) nach Anspruch 1 bis 3, **dadurch gekennzeichnet, dass** die auswählbare Regelstrategie (30) zumindest eine Regelstrategie "Effizienz" (31) oder "Leistung" (32) umfasst und wobei die Regelstrategie "Effizienz" 31 eine Optimierung des Kraftstoffverbrauchs pro Flächeneinheit durchführt und wobei die Regelstrategie "Leistung" 32 eine Optimierung der Flächenleistung durchführt.

5. Zugmaschine (1) nach einem der vorangehenden Ansprüche, **dadurch gekennzeichnet, dass** die Optimierungszielgrößen (33) "Flächenleistung" (34), "Flächenverbrauch" (35), "Ertrag pro Fläche" (36), "Kosten pro Fläche" (37) und/oder "Arbeitsqualität" (38) sind, wobei die Optimierungszielgröße "Arbeitsqualität" (38) vorzugsweise die Einmischung von Ernterückständen, die Krümelung, die Rückverfestigung und die Futterqualität umfasst.

6. Zugmaschine (1) nach einem der vorangehenden Ansprüche, **dadurch gekennzeichnet, dass** die zur optimierten Ansteuerung des Antriebsstrangs (5) zu berücksichtigenden Parameter Betriebsparameter des Antriebsstranges (5), des zumindest eines Nebenaggregates (19) des Antriebsstranges (5), des Anbaugerätes (3, 4) und/oder Umgebungsbedingungen sind.

7. Zugmaschine (1) nach einem der vorangehenden Ansprüche, **dadurch gekennzeichnet, dass** dem Antriebsstrang (5) Sensoreinrichtungen (25) zugeordnet sind, die zur Bestimmung von Betriebsparametern des Antriebsstranges (5) eingerichtet sind.

8. Zugmaschine (1) nach einem der vorangehenden Ansprüche, **dadurch gekennzeichnet, dass** der Zugmaschine (1) und/oder dem Anbaugerät (3, 4) zusätzliche Sensoreinrichtungen (26) zugeordnet sind, die zur Bestimmung von Betriebsinformationen der Zugmaschine (1) und/oder des Anbaugerätes (3, 4) eingerichtet sind.

9. Zugmaschine (1) nach einem der Ansprüche 6 bis 8, **dadurch gekennzeichnet, dass** die Betriebsparameter des Antriebsstranges (5) die Ausgangsleistung des zumindest einen Antriebsmotors (16), die Ausgangsleistung des Getriebes (17) bzw. die Getriebeauslastung, die Antriebsleistung des zumindest einen Nebenaggregates (19) und/oder des zumindest einen Nebenabtriebes (18), den Schlupf, die Fahrgeschwindigkeit, die Getriebeübersetzung und/oder den Leistungsfluss im Hydraulikantriebsstrang umfassen.

10. Zugmaschine (1) nach einem der Ansprüche 6 bis 9, **dadurch gekennzeichnet, dass** die Betriebsparameter des Anbaugerätes (3, 4), Art und/oder Typ des Anbaugerätes (3, 4), Hubposition und/oder Arbeitstiefe des Anbaugerätes (3, 4) umfassen.

11. Zugmaschine (1) nach einem der vorangehenden Ansprüche, **dadurch gekennzeichnet, dass** in der Speichereinheit (8) ein funktionales Modell des Antriebsstranges (5) hinterlegt ist, welches zumindest einen Teil der funktionalen Zusammenhänge des Antriebsstranges (5) abbildet.

12. Zugmaschine (1) nach einem der vorangehenden Ansprüche, **dadurch gekennzeichnet, dass** zur Abbildung der funktionalen Zusammenhänge des Antriebsstranges (5) dem Betriebsparameter Motordrückung (n₁, n₂) mindestens ein n-dimensionales Kennfeld (42) zugeordnet ist, wobei die Motordrückung (n₁, n₂) als Ausgangsgröße des mindestens einen n-dimensionalen Kennfeldes (42) definiert ist.

13. Zugmaschine (1) nach einem der vorangehenden Ansprüche, **dadurch gekennzeichnet, dass** zumindest ein oder mehrere Betriebsparameter des Antriebsstranges (5) und des zumindest einen Nebenaggregates (19) des Antriebsstranges (5) die Eingangsgrößen des mindestens einen n-dimensionalen Kennfeldes (42) sind.

14. Zugmaschine (1) nach einem der vorangehenden Ansprüche, **dadurch gekennzeichnet, dass** die Recheneinheit (7) das mindestens eine n-dimensionale Kennfeld (42) in Abhängigkeit von der ausgewählten Regelstrategie (30) auswählt und der Ermittlung der Motordrückung (n₁, n₂) zugrunde legt.

15. Zugmaschine (1) nach einem der vorangehenden Ansprüche, **dadurch gekennzeichnet, dass** die Recheneinheit (7) das mindestens eine n-dimensionale Kennfeld (42) im laufenden Betrieb, insbesondere zyklisch, mit den Einsatzbedingungen der Zugmaschine (1) abgleicht, vorzugsweise, dass in der Speichereinheit (8) mindestens ein n-dimensionales Initialkennfeld (42') hinterlegt ist, und dass bei der ersten Ermittlung der Motordrückung (n₁, n₂) die Recheneinheit (7) die Ermittlung basierend auf dem Initialkennfeld (42') vornimmt.

16. Zugmaschine (1) nach Anspruch 15, **dadurch gekennzeichnet, dass** die Recheneinheit (7) dazu eingerichtet ist, eine Anpassung der Ausprägung des Initialkennfeldes (42') an bestehende Einsatzbedingungen durch die Verwendung gemessener Parameter des Antriebsstranges (5) oder das Anfahren von Stützstellen im Initialkennfeld (42') durchzuführen.

17. Verfahren zum Betreiben einer Zugmaschine (1), insbesondere eines Traktors (2), mit einem Antriebsstrang (5) sowie wenigstens einem an die Zugmaschine (1) adaptierten Anbaugerät (3, 4), wobei der Antriebsstrang (5) zumindest einen Antriebsmotor (16), ein Getriebe (17), zumindest einen Nebenabtrieb (18) sowie zumindest ein Nebenaggregat (19) umfasst, **dadurch gekennzeichnet, dass** der Antriebsstrang (5) durch ein Fahrerassistenzsystem (6) der Zugmaschine (1) angesteuert wird, welches mit einer Recheneinheit (7), einer Speichereinheit (8) sowie einer Ein-Ausgabeeinheit (9) ausgeführt ist, wobei der Antriebsstrang (5) durch einen kennlinienbasierend arbeitenden Motordrückungsautomaten (27) des Fahrerassistenzsystems (6) angesteuert wird, wobei für einen optimierten Betrieb der Antriebsstrang (5) von dem Motordrückungsautomat (27) in Abhängigkeit von in der Speichereinheit (8) hinterlegten auswählbaren Regelstrategien (30) und/oder Optimierungszielgrößen (33) angesteuert wird.

## Claims

1. A towing vehicle (1), in particular a tractor (2), with a drive train (5) as well as at least one attachment (3, 4) adapted to the towing vehicle (1), wherein the drive train (5) comprises at least one propulsion engine (16), a transmission (17), at least one auxiliary power take-off (18) and at least one auxiliary assembly (19), **characterized in that** the towing vehicle (1) has a driver assistance system (6) for controlling the drive train (5) which is configured with a processing unit (7), a storage unit (8) as well as an input/output unit (9), wherein the driver assistance system (6) comprises an automated engine lugging device (27) which operates on the basis of characteristic curves, wherein the automated engine lugging device (27) is configured for an optimized control of the drive train (5) as a function of selectable control strategies (30) and/or optimization target variables (33) stored in the storage unit (8).

2. The towing vehicle (1) according to claim 1, **characterized in that** the drive train (5) together with the driver assistance system (6) forms the automated engine lugging device (27), in which, in order to execute the respectively selected control strategy (30) and/or optimization target variable (33), the processing unit (7) is configured to autonomously determine parameters of the drive train (5) and to specify them to the drive train (5), preferably to the propulsion engine (16) and/or to the transmission (17),.

3. The towing vehicle (1) according to claim 1 or claim 2, **characterized in that** the control strategies (30) are towing vehicle-specific strategies and/or attachment-specific strategies.

4. The towing vehicle (1) according to claims 1 to 3, **characterized in that** the selectable control strategy (30) comprises at least one "Efficiency" (31) or "Power" (32) control strategy and wherein the "Efficiency" (31) control strategy carries out an optimization of the fuel consumption per unit area and wherein the "Power" (32) control strategy carries out an optimization of the area output.

5. The towing vehicle (1) according to one of the preceding claims, **characterized in that** the optimization target variables (33) are "Area output" (34), "Land usage" (35), "Yield per unit area"36), "Cost per unit area" (37) and/or "Work quality", and wherein the optimization target variable "Work quality" (38) preferably comprises a mixture of crop residues, crumbling, reconsolidation and feed quality.

6. The towing vehicle (1) according to one of the preceding claims, **characterized in that** the parameters to be taken into consideration for optimized control of the drive train (5) are the operating parameters of the drive train (5), of the at least one auxiliary assembly (19) of the drive train (5), of the attachment (3, 4) and/or environmental conditions.

7. The towing vehicle (1) according to one of the preceding claims, **characterized in that** sensor devices (25) are associated with the drive train (5) which are configured to determine operating parameters of the drive train (5).

8. The towing vehicle (1) according to one of the preceding claims, **characterized in that** additional sensor devices (26) are associated with the towing vehicle (1) and/or the attachment (3, 4), and which are configured to determine operational information of the towing vehicle (1) and/or of the attachment (3, 4).

9. The towing vehicle (1) according to one of claims 6 to 8, **characterized in that** the operating parameters of the drive train (5) comprise the power output of the at least one propulsion engine (16), the power output of the transmission (17) or the transmission load, the driving power of the at least one auxiliary assembly (19) and/or of the at least one auxiliary power take-off (18), the slip, the driving speed, the transmission ratio, and/or the power flow in the hydraulic drive train.

10. The towing vehicle (1) according to one of claims 6 to 9, **characterized in that** the operating parameters of the attachment (3, 4) comprise the nature and/or type of attachment (3, 4), the lifting position and/or the working depth of the attachment (3, 4).

11. The towing vehicle (1) according to one of the preceding claims, **characterized in that** a functional model of the drive train (5) is stored in the storage unit (8), the model representing at least a portion of the functional relationships of the drive train (5)

12. The towing vehicle (1) according to one of the preceding claims, **characterized in that** in order to represent the functional relationships of the drive train (5), at least one n-dimensional characteristic map (42) is assigned to the engine lugging (n₁, n₂) operating parameter, wherein the engine lugging (n₁, n₂) is defined as the output variable of the at least one n-dimensional characteristic map (42).

13. The towing vehicle (1) according to one of the preceding claims, **characterized in that** at least one or more operating parameters of the drive train (5) and of the at least one auxiliary assembly (19) of the drive train (5) are the input variables of the at least one n-dimensional characteristic map (42).

14. The towing vehicle (1) according to one of the preceding claims, **characterized in that** the processing unit (7) selects the at least one n-dimensional characteristic map (42) as a function of the selected control strategy (30) and bases the determination of the engine lugging (n₁, n₂) thereon.

15. The towing vehicle (1) according to one of the preceding claims, **characterized in that** the processing unit (7) aligns the at least one n-dimensional characteristic map (42) during ongoing operation, in particular cyclically, with the conditions of use of the towing vehicle (1), preferably **in that** at least one n-dimensional initial characteristic map (42') is stored in the storage unit (8), and **in that** during the initial determination of the engine lugging (n₁, n₂), the processing unit (7) carries out the determination based on the initial characteristic map (42').

16. The towing vehicle (1) according to claim 15, **characterized in that** the processing unit (7) is configured to adapt the form of the initial characteristic map (42') to existing conditions of use by the use of measured parameters of the drive train (5) or by approaching sampling points in the initial characteristic map (42').

17. A method for operating a towing vehicle (1), in particular a tractor (2), with a drive train (5) as well as at least one attachment (3, 4) adapted to the towing vehicle (1), wherein the drive train (5) comprises at least one propulsion engine (16), a transmission (17), at least one auxiliary power take-off (18) as well as at least one auxiliary assembly (19), **characterized in that** the drive train (5) is controlled by a driver assistance system (6) of the towing vehicle (1) which is configured with a processing unit (7), a storage unit (8) as well as an input/output unit (9), wherein the drive train (5) is controlled by an automated engine lugging device (27) of the driver assistance system (6) which operates on the basis of characteristic curves, wherein for an optimized operation, the drive train (5) is controlled by the automated engine lugging device (27) as a function of selectable control strategies (30) and/or optimization target variables (33) stored in the storage unit (8).

## Revendications

1. Engin de traction (1), en particulier tracteur (2), comprenant une chaîne cinématique (5) ainsi qu'au moins un outil attelé (3, 4) adapté à l'engin de traction (1), la chaîne cinématique (5) comportant au moins un moteur d'entraînement (16), un mécanisme de transmission (17), au moins une sortie d'entraînement auxiliaire (18) et au moins un organe auxiliaire (19), **caractérisé en ce que** l'engin de traction (1) présente, pour l'activation de la chaîne cinématique (5), un système d'assistance au conducteur (6) qui est réalisé avec une unité de calcul (7), une unité de mémoire (8) et une unité d'entrée-sortie (9), le système d'assistance au conducteur (6) comportant un automate de chute de régime moteur (27) fonctionnant sur la base de courbes caractéristiques, l'automate de chute de régime moteur (27) étant conçu pour une activation optimisée de la chaîne cinématique (5), en fonction de stratégies de réglage (30) sélectionnables, enregistrées dans l'unité de mémoire (8), et/ou de grandeurs cibles d'optimisation (33).

2. Engin de traction (1) selon la revendication 1, **caractérisé en ce que**, conjointement avec le système d'assistance au conducteur (6), la chaîne cinématique (5) forme l'automate de chute de régime moteur (27), par le fait que l'unité de calcul (7) est conçue pour déterminer de façon autonome des paramètres de la chaîne cinématique (5) et pour les prédéfinir pour la chaîne cinématique (5), de préférence pour le moteur d'entraînement (16) et/ou le mécanisme de transmission (17), en vue de la mise en oeuvre de la stratégie de réglage (30) et/ou de la grandeur cible d'optimisation (33) respective sélectionnée.

3. Engin de traction (1) selon la revendication 1 ou 2, **caractérisé en ce que** les stratégies de réglage (30) sont des stratégies spécifiques à l'engin de traction et/ou spécifiques à l'outil rapporté.

4. Engin de traction (1) selon les revendications 1 à 3, **caractérisé en ce que** la stratégie de réglage (30) sélectionnable comprend au moins une stratégie de réglage « efficacité » (31) ou « performance » (32), la stratégie de réglage « efficacité » 31 réalisant une optimisation de la consommation de carburant par unité de surface, et la stratégie de réglage « performance » 32 réalisant une optimisation de la performance par surface.

5. Engin de traction (1) selon l'une des revendications précédentes, **caractérisé en ce que** les grandeurs cibles d'optimisation (33) sont la « performance par surface » (34), la « consommation par unité de surface » (35), le « rendement par unité de surface » (36), les « coûts par unité de surface » (37) et/ou la « qualité de travail » (38), la grandeur cible d'optimisation « qualité de travail » (38) comprenant de préférence le mélange de résidus de récolte, l'émiettement, le rappuyage et la qualité du fourrage.

6. Engin de traction (1) selon l'une des revendications précédentes, **caractérisé en ce que** les paramètres à prendre en compte pour l'activation optimisée de la chaîne cinématique (5) sont des paramètres de fonctionnement de la chaîne cinématique (5), de l'organe auxiliaire (19), au nombre d'au moins un, de la chaîne cinématique (5), de l'outil attelé (3, 4) et/ou des conditions de l'environnement.

7. Engin de traction (1) selon l'une des revendications précédentes, **caractérisé en ce que** des dispositifs capteurs (25) sont associés à la chaîne cinématique (5), qui sont conçus pour déterminer des paramètres de fonctionnement de la chaîne cinématique (5).

8. Engin de traction (1) selon l'une des revendications précédentes, **caractérisé en ce que** des dispositifs capteurs (26) supplémentaires sont associés à l'engin de traction (1) et/ou à l'outil attelé (3, 4), qui sont conçus pour déterminer des informations de fonctionnement de l'engin de traction (1) et/ou de l'outil attelé (3, 4).

9. Engin de traction (1) selon l'une des revendications 6 à 8, **caractérisé en ce que** les paramètres de fonctionnement de la chaîne cinématique (5) comprennent la puissance de sortie du moteur d'entraînement (16), au nombre d'au moins un, la puissance de sortie du mécanisme de transmission (17), respectivement le taux d'utilisation du mécanisme de transmission, la puissance d'entraînement de l'organe auxiliaire (19), au nombre d'au moins un, et/ou de la sortie d'entraînement auxiliaire (18), au nombre d'au moins une, le patinage, la vitesse d'avancement, le rapport du mécanisme de transmission et/ou le flux de puissance dans la ligne d'entraînement hydraulique.

10. Engin de traction (1) selon l'une des revendications 6 à 9, **caractérisé en ce que** les paramètres de fonctionnement de l'outil rapporté (3, 4) comprennent le genre et/ou le type d'outil attelé (3, 4), la position de levage et/ou la profondeur de travail de l'outil attelé (3, 4).

11. Engin de traction (1) selon l'une des revendications précédentes, **caractérisé en ce qu'**un modèle fonctionnel de la chaîne cinématique (5) est enregistré dans l'unité de mémoire (8), modèle qui reproduit au moins une partie des relations fonctionnelles de la chaîne transmission (5)

12. Engin de traction (1) selon l'une des revendications précédentes, **caractérisé en ce que** pour la reproduction des relations fonctionnelles de la chaîne cinématique (5), au moins un champ caractéristique à n dimensions (42) est associé au paramètre de fonctionnement chute de régime moteur (n₁, n₂), la chute de régime moteur (n₁, n₂) étant définie comme grandeur de sortie du champ caractéristique à n dimensions (42), au nombre d'au moins un.

13. Engin de traction (1) selon l'une des revendications précédentes, **caractérisé en ce qu'**au moins un ou plusieurs paramètres de fonctionnement de la chaîne cinématique (5) et de l'organe auxiliaire (19), au nombre d'au moins un, de la chaîne cinématique (5) sont les grandeurs d'entrée du champ caractéristique à n dimensions (42), au nombre d'au moins un.

14. Engin de traction (1) selon l'une des revendications précédentes, **caractérisé en ce que** l'unité de calcul (7) choisit le champ caractéristique à n dimensions (42), au nombre d'au moins un, en fonction de la stratégie de réglage (30) sélectionnée et l'utilise comme base pour la détermination de la chute de régime moteur (n₁, n₂).

15. Engin de traction (1) selon l'une des revendications précédentes, **caractérisé en ce qu'**au cours du fonctionnement, l'unité de calcul (7) compare le champ caractéristique à n dimensions (42), au nombre d'au moins un, aux conditions d'utilisation de l'engin de traction (1), notamment de manière cyclique, de préférence **en ce qu'**au moins un champ caractéristique initial à n dimensions (42') est enregistré dans l'unité de mémoire (8), et **en ce que** lors de la première détermination de la chute de régime moteur (n₁, n₂), l'unité de calcul (7) procède à la détermination sur la vase du champ caractéristique initial (42').

16. Engin de traction (1) selon la revendication 15, **caractérisé en ce que** l'unité de calcul (7) est conçue pour effectuer une adaptation de la manifestation du champ caractéristique initial (42') aux conditions d'utilisation existantes, en utilisant des paramètres mesurés de la chaîne cinématique (5) ou en sélectionnant des points nodaux dans le champ caractéristique initial (42').

17. Procédé pour faire fonctionner un engin de traction (1), notamment un tracteur (2), comprenant une chaîne cinématique (5) ainsi qu'au moins un outil attelé (3, 4) adapté à l'engin de traction (1), la chaîne cinématique (5) comportant au moins un moteur d'entraînement (16), un mécanisme de transmission (17), au moins une sortie d'entraînement auxiliaire (18) et au moins un organe auxiliaire (19), **caractérisé en ce que** la chaîne cinématique (5) est activée par un système d'assistance au conducteur (6) de l'engin de traction (1), qui est réalisé avec une unité de calcul (7), une unité de mémoire (8) ainsi qu'une unité d'entrée-sortie (9), la chaîne cinématique (5) étant activée par un automate de chute de régime moteur (27), fonctionnant sur la base de courbes caractéristiques, du système d'assistance au conducteur (6), sachant que pour un fonctionnement optimisé, la chaîne cinématique (5) est activée par l'automate de chute de régime moteur (27), en fonction de stratégies de réglage (30) sélectionnables, enregistrées dans l'unité de mémoire (8), et/ou de grandeurs cibles d'optimisation (33).
